# EUROPÄISCHE PATENTSCHRIFT

(11) **EP 2 556 002 B1**
(45) Veröffentlichungstag und Bekanntmachung des Hinweises auf die Patenterteilung: **25.06.2014**
(21) Anmeldenummer: 11710691.4
(22) Anmeldetag: 16.03.2011
(51) Int. Cl.: B65G 23/08, F16H 1/32

(54) **ROLLENANTRIEB**
ROLLER DRIVE
ENTRAÎNEMENT POUR ROULEAU

(30) Priorität: 07.04.2010 DE 102010014174
(43) Veröffentlichungstag der Anmeldung: 13.02.2013
(73) Patentinhaber: Sew-Eurodrive GmbH & Co. KG, 76646 Bruchsal (DE)
(72) Erfinder: SCHMIDT, Josef, 76676 Graben-Neudorf (DE); DEGEN, Dirk, 76646 Bruchsal (DE)
(86) Internationale Anmeldenummer: PCT/EP2011/001286
(87) Internationale Veröffentlichungsnummer: WO 2011/124313

(56) Entgegenhaltungen:
- EP-A1- 1 916 444
- WO-A1-95/15897
- WO-A1-99/00317
- CN-U- 2 063 933
- CN-Y- 2 565 780
- CN-Y- 2 743 300
- DE-A1- 4 426 106
- DE-A1-102004 048 196
- DE-B- 1 231 078
- DE-C- 499 227
- DE-C- 542 206
- DE-C1- 19 618 248
- FR-A- 664 919
- US-A1- 2006 040 779

## Beschreibung

Die Erfindung betrifft einen Rollenantrieb.

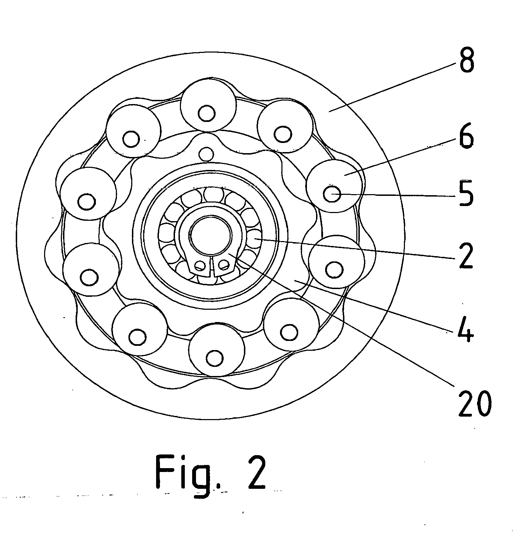

Aus der Figur 2 der RU 2 338 102 C1 ist ein Umlaufgetriebe bekannt.

**Aus der** DE 196 18 248 C1 **ist ein gattungsgemäßen Rollenantrieb bekannt.**

Der Erfindung liegt daher die Aufgabe zugrunde, einen Rollenantrieb weiterzubilden.

Erfindungsgemäß wird die Aufgabe bei dem Rollenantrieb nach den in Anspruch 1 angegebenen Merkmalen gelöst.

Wichtige Merkmale der Erfindung bei dem Rollenantrieb sind, dass eine Transportrolle von einem innerhalb der Transportrolle angeordneten Elektromotor angetrieben wird, dessen Rotorwelle gegenüber dem Gehäuse des Motors drehbar gelagert ist, wobei die Rotorwelle eintreibende Welle eines Umlaufgetriebes ist oder mit dieser drehfest verbunden ist und der Abtrieb des Getriebes kraftschlüssig mit der Transportrolle, insbesondere an deren Innenseite, verbunden ist.

Von Vorteil ist dabei, dass eine möglichst hohe Übersetzung der vom Motor abgegebenen Drehzahl auf kompaktem Raum ermöglicht ist. Bei Überlastung ist wegen des Kraftschlusses der Elektromotor und das Getriebe geschützt.

Als Abtrieb des Umlaufgetriebes ist eine Scheibe vorgesehen, die über ein Lager an der Rotorwelle drehbar gelagert ist. Von Vorteil ist dabei, dass die Transportrolle sozusagen über ein übersetzendes Lager antreibbar ist.

Die Scheibe ist mit einer Wange mittels axial angeordneter Bolzen verbunden, wobei die axiale Richtung parallel zur Rotorwellenachse ausgerichtet ist. Von Vorteil ist dabei, dass ein koaxialen Umlaufgetriebe einsetzbar ist.

Die Wange ist über ein Lager, insbesondere Kugellager, am Hohlteil oder am Motorgehäuse gelagert, wobei der Außenring des Lagers an der Wange angeordnet ist und der Innenring des Lagers am Motorgehäuse beziehungsweise Hohlteil angeordnet ist. Von Vorteil ist dabei, dass die relative Drehzahl zwischen Innenring und Außenring des Lagers verringerbar ist, das der Radius kleiner ist als bei einer Anordnung, bei der der Außenring des Lagers am Hohlteil und der Innenring an der Wange angeordnet ist.

Ein jeweiliger Bolzen nimmt eine jeweilige Umlaufscheibe auf, die in Berührung steht mit dem Hohlteil, welches mit dem Motorgehäuse fest verbunden ist, und mit der Zykloscheibe, welche mit der Rotorwelle drehfest verbunden ist. Von Vorteil ist dabei, dass die Umlaufscheibe in Umlaufrichtung angetrieben wird und somit abtriebsseitig die Scheibe antreibt.

Die Umlaufscheiben ist axial zwischen der Scheibe und der Wange angeordnet. Von Vorteil ist dabei, dass der Kurbelabtrieb beidseitig gelagert ist.

Die Scheibe ist als Abtrieb des Getriebes kraftschlüssig mit der Transportrolle verbunden. Von Vorteil ist dabei, dass bei Überlastung ein Schutz für das Getriebe vorgesehen ist.

Bei einer vorteilhaften Ausgestaltung sind die Zykloscheibe, das Hohlteil und/oder die Umlaufscheiben aus Kunststoff ausgeführt. Von Vorteil ist dabei, dass kein Schmiermittel im Getriebe notwendig ist.

Bei einer vorteilhaften Ausgestaltung sind die Bolzen aus Metall ausgeführt. Von Vorteil ist dabei, dass der Verschleiß reduzierbar ist und die Materialpaarung Metall mit Kunststoff eine Schmierung einsparbar macht.

Weitere Vorteile ergeben sich aus den Unteransprüchen.

Die Erfindung wird nun anhand von Abbildungen näher erläutert:
In der Figur 1 ist ein Ausschnitt einer erfindungsgemäßen Antriebsanordnung in Querschnitt gezeigt, wobei die Antriebsanordnung ein Umlaufgetriebe umfasst, welches von einem koaxial angeordneten Elektromotor angetrieben wird und insgesamt in einer Transportrolle angeordnet ist. Die Transportrolle ist drehbar gelagert, insbesondere relativ zum Stator des Elektromotors, und dient zum Transport von Objekten senkrecht zur Rotorachse des Elektromotors und auch Rollenachse.
In der Figur 2 ist eine zugehörige Draufsicht gezeigt.
In der Figur 3 ist die Antriebsanordnung gezeigt
In der Figur 4 ist die Transportrolle 42 gezeigt, wobei diese mittels Lager 41 an Stutzen 40 gelagert ist. Einer der Stutzen 40 ist mit dem Motorgehäuse 30 verbunden.

Die Rotorwelle 1 des Elektromotors ist zweistückig mittels eines Klemmmittels 20 mit der eintreibenden Welle des Umlaufgetriebes verbindbar. Im Folgenden wird der Einfachheit halber nur von einer eintreibenden Rotorwelle 1 gesprochen.

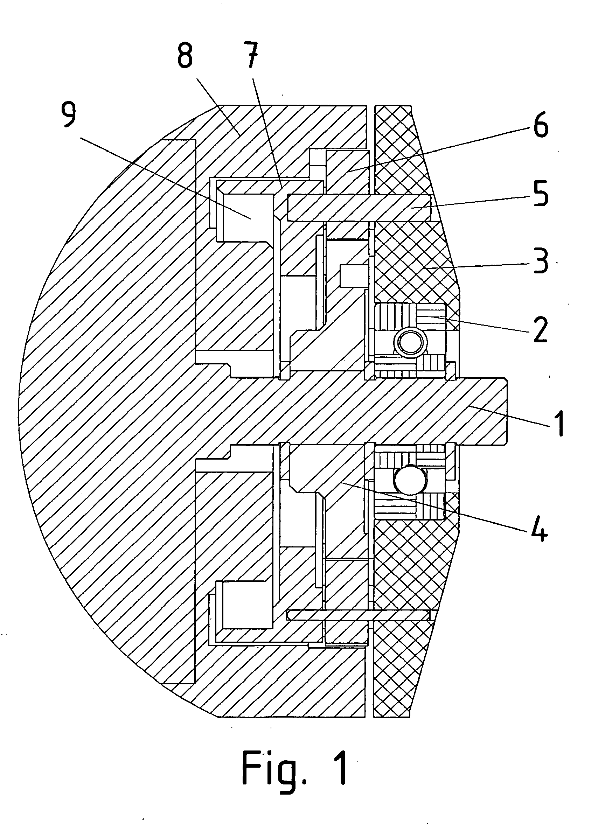

Wie in Figur 1 gezeigt, treibt die Rotorwelle 1 eine Zykloscheibe 4 an. Diese Zykloscheibe 4 weist an ihrem Außenumfang einen zykloidalen Verlauf auf.

Am Motorgehäuse ist ein Hohlteil 8 befestigt, zu welchem die Rotorwelle drehbar gelagert ist. Das Hohlteil 8 weist an seinem Innenumfang ebenfalls einen zykloidalen Verlauf auf.
Die Scheibe 3 ist über das Lager 2 am Außenumfang der Rotorwelle 1 gelagert und somit relativ zu dieser drehbar gelagert. In der Scheibe 3 sind Bolzen 5 befestigt, auf welchen jeweilige Umlaufscheiben 6 gelagert vorgesehen sind.

Wie oben erwähnt, sind die Bolzen 5 an ihrem ersten axialen Endbereich in der Scheibe 3 befestigt und mit ihrem anderen axialen Endbereich an einer Wange 7, welche auf der von der Umlaufscheibe 6 abgewandten Seite angeordnet ist.

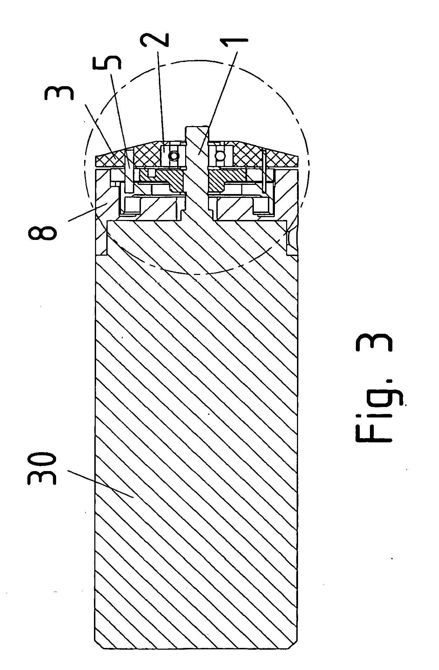

Die über die Bolzen 5 verbundene Scheibe 3 mit Wange 7 ist über ein Lager 9 gegen das Hohlteil 8 drehbar gelagert. Somit ist diese Verbindung über das insbesondere in Figur 3 gezeigte Lager 9 zum Hohlteil 8 und somit auch zum Motorgehäuse gelagert. Zur beidseitigen Lagerung der Verbindung ist das Lager 2 vorgesehen, welches allerdings gegen die Rotorwelle 1 gelagert ist, die selber wiederum drehbar gelagert ist gegenüber dem Motorgehäuse. Somit sind die Lager der beidseitigen Lagerung der Verbindung unterschiedlichen Drehzahlen ausgesetzt. Entsprechend sind die Wärmeerzeugungen aufgeteilt und fallen an verschiedenen Orten an.

Wenn also von der Rotorwelle die Zykloscheibe 4 in Drehbewegung versetzt wird, werden die Umlaufscheiben in Umfangsrichtung bewegt, wobei die Umlaufscheiben an dem Innenprofil des Hohlteils 8 und am Außenumfang der Zykloscheibe 4 abrollen.

Der gesamte Motor samt Umlaufgetriebe ist in einer Transportrolle 30 angeordnet, die gegenüber dem Motorgehäuse drehbar gelagert ist. Hierzu ist zwischen Schiebe 3 und Transportrolle eine Klemmverbindung vorgesehen.

In einem weiteren erfindungsgemäßen Ausführungsbeispiel ist zur Bildung der Klemmverbindung zwischen Scheibe 3 und Transportrolle 30 die Scheibe 3 an die Innenfläche der Transportrolle 30 angedrückt und somit kraftschlüssig verbunden. Die Scheibe 3 ist somit mit einem Reibrad einstückig ausgeführt, das die kraftschlüssige Verbindung zur Transportrolle herstellt.

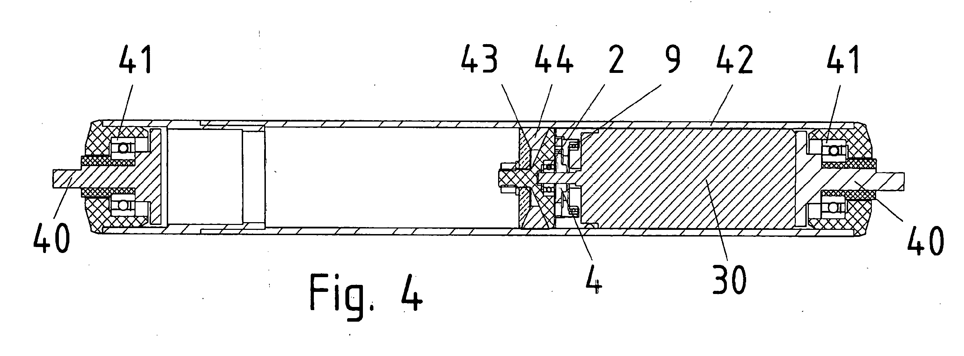

In einem weiteren erfindungsgemäßen Ausführungsbeispiel ist gemäß Figur 4 zur Bildung der Klemmverbindung zwischen Scheibe 3 und Transportrolle 42 eine weitere Scheibe 43 mit der Scheibe 3 verbunden, wobei beiden Scheiben (3, 43) eine jeweilige konisch verlaufende, zur anderen Scheibe zugewandte Seite aufweisen, zwischen denen eine elastisch verformbares Teil 44 angeordnet und in axialer Richtung angepresst ist, so dass das Teil 44 in radialer Richtung ausgestülpt ist und dadurch an die Innenseite der Transportrolle 42 angedrückt wird. Auf diese Weise ist das Antriebs-Drehmoment vom Motor über das Umlaufgetriebe an die Transportrolle 42 übertragbar.

Das Umlaufgetriebe erfüllt somit auch die Funktion der drehbaren Lagerung der Transportrolle.

Vorzugsweise werden bei den Ausführungsbeispielen die Zykloscheibe 4, das Hohlteil 8 und auch die Umlaufscheiben 6 aus Kunststoff ausgeführt. Die Bolzen 5 sind jedoch aus Metall ausgeführt. Auf diese Weise ist sogar ein schmiermittelfreies Betreiben des Getriebes ermöglicht. Alternativ sind auch die Umlaufscheiben aus einem Kunststoff ausführbar.

In einem weiteren erfindungsgemäßen Ausführungsbeispiel ist das Umlaufgetriebe mehrstufig ausgeführt und somit eine höhere Übersetzung und Drehzahl der Transportrolle erzielbar.

### Bezugszeichenliste

- 1: Rotorwelle
- 2: Lager
- 3: Scheibe
- 4: Zykloscheibe
- 5: Bolzen
- 6: Umlaufscheibe
- 7: Wange
- 8: Hohlteil
- 9: Lager
- 20: Klemmmittel
- 30: Transportrolle
- 40: Stutzen
- 41: Lager der Transportrolle
- 42: Transportrolle
- 43: weitere Scheibe
- 44: elastisch verformbares Teil

## Patentansprüche

1. Rollenantrieb,
wobei eine Transportrolle von einem innerhalb der Transportrolle (30) angeordneten Elektromotor angetrieben wird, dessen Rotorwelle (1) gegenüber dem Gehäuse des Motors drehbar gelagert ist, wobei der Rollenantrieb einen Umlaufgetriebe und einen Hohlteil (8) aufweist, wobei
die Rotorwelle (1) eintreibende Welle des Umlaufgetriebes ist und der Abtrieb des Getriebes kraftschlüssig mit der Transportrolle, insbesondere an deren Innenseite, verbunden ist,
wobei als Abtrieb des Umlaufgetriebes eine Scheibe (3) vorgesehen ist, die über ein Lager (2) an der Rotorwelle (1) drehbar gelagert ist,
**dadurch gekennzeichnet, dass**
die Scheibe (3) mit einer Wange (7) mittels axial angeordneter Bolzen (5)verbunden ist, wobei die axiale Richtung parallel zur Rotorwellenachse ausgerichtet ist,
wobei die Wange (7) über ein Lager (9), insbesondere Kugellager, am Hohlteil (8) oder am Motorgehäuse gelagert ist, wobei der Außenring des Lagers (9) an der Wange (7) angeordnet ist und der Innenring des Lagers (9) am Motorgehäuse beziehungsweise Hohlteil (8) angeordnet ist,
wobei ein jeweiliger Bolzen (5) eine jeweilige Umlaufscheibe (6) aufnimmt, die in Berührung steht mit dem Hohlteil (8), welches mit dem Motorgehäuse fest verbunden ist, und mit einer Zykloscheibe (4), welche mit der Rotorwelle (1) drehfest verbunden ist,
wobei die Umlaufscheiben (6) in axialer Richtung zwischen der Scheibe (3) und der Wange (7) angeordnet sind,
wobei die Scheibe (3) als Abtrieb des Getriebes kraftschlüssig mit der Transportrolle (30) verbunden ist.

2. Rollenantrieb nach mindestens einem der vorangegangenen Ansprüche,
**dadurch gekennzeichnet, dass**
die Zykloscheibe (4), das Hohlteil (8) und/oder die Umlaufscheiben (6) aus Kunststoff ausgeführt sind.

3. Rollenantrieb nach mindestens einem der vorangegangenen Ansprüche,
**dadurch gekennzeichnet, dass**
die Bolzen (5) aus Metall ausgeführt sind.

## Claims

1. A roller drive,
wherein a transport roller is driven by an electric motor arranged within the transport roller (30), the rotor shaft (1) of which motor is rotatably mounted relative to the housing of the motor,
wherein the roller drive has an epicyclic gear and a hollow part (8), wherein
the rotor shaft (1) is [the] input shaft of the epicyclic gear and the power take-off of the gear is connected non-positively to the transport roller, in particular to the inside thereof,
wherein a disc (3) is provided as the power take-off of the epicyclic gear, which disc is rotatably mounted on the rotor shaft (1) via a bearing (2),
**characterised in that**
the disc (3) is connected to a cheek (7) by means of axially arranged pins (5), the axial direction being oriented parallel to the rotor-shaft axis,
the cheek (7) being mounted via a bearing (9), in particular ball bearing, on the hollow part (8) or on the motor housing, the outer race of the bearing (9) being arranged on the cheek (7) and the inner race of the bearing (9) being arranged on the motor housing or hollow part (8),
a respective pin (5) receiving a respective revolving disc (6) which is in contact with the hollow part (8), which is connected securely to the motor housing, and with a cyclo-disc (4) which is connected to the rotor shaft (1) in rotation-resistant manner,
the revolving discs (6) being arranged in the axial direction between the disc (3) and the cheek (7),
the disc (3) as power take-off of the gear being connected non-positively to the transport roller (30).

2. A roller drive according to at least one of the preceding claims, **characterised in that** the cyclo-disc (4), the hollow part (8) and/or the revolving discs (6) are made from plastics material.

3. A roller drive according to at least one of the preceding claims, **characterised in that** the pins (5) are made of metal.

## Revendications

1. Entraînement pour rouleau,
un rouleau de transport étant entraîné par un moteur électrique logé à l'intérieur dudit rouleau de transport (30), et dont l'arbre rotorique (1) est monté à rotation par rapport au carter dudit moteur,
ledit entraînement pour rouleau comprenant un engrenage planétaire et une partie creuse (8), sachant que
l'arbre rotorique (1) représente l'arbre d'entrée dudit engrenage planétaire, et le côté mené dudit engrenage est relié au rouleau de transport par engagement positif, notamment à la face intérieure dudit rouleau,
sachant que ledit côté mené dudit engrenage planétaire se présente comme un disque (3) monté à rotation sur l'arbre rotorique (1) par l'intermédiaire d'un coussinet (2),
**caractérisé par le fait que**
le disque (3) est relié à une joue (7) au moyen de tenons (5) disposés axialement, la direction axiale étant orientée parallèlement à l'axe de l'arbre rotorique,
ladite joue (7) étant montée sur la partie creuse (8) ou sur le carter du moteur par l'intermédiaire d'un roulement (9), en particulier d'un roulement à billes, la bague extérieure du roulement (9) étant située sur ladite joue (7) et la bague intérieure dudit roulement (9) étant respectivement située sur ledit carter du moteur, ou sur ladite partie creuse (8),
sachant qu'un tenon considéré (5) reçoit un disque respectif (6) en révolution, en contact avec la partie creuse (8) reliée rigidement au carter du moteur, et avec un disque cycloïdal (4) relié à l'arbre rotorique (1) avec verrouillage rotatif,
les disques (6) en révolution étant interposés, dans la direction axiale, entre le disque (3) et la joue (7),
ledit disque (3), représentant le côté mené de l'engrenage, étant relié au rouleau de transport (30) par engagement positif.

2. Entraînement pour rouleau, selon la revendication1,
**caractérisé par le fait que**
le disque cycloïdal (4), la partie creuse (8) et/ou les disques (6) en révolution est (sont) constitué(e)(s) d'une matière plastique.

3. Entraînement pour rouleau, selon au moins l'une des revendications précédentes,
**caractérisé par le fait que**
les tenons (5) sont constitués d'un métal.
